(19) Europäisches Patentamt
European Patent Office
Office européen des brevets

(11) Veröffentlichungsnummer: **0 276 433 B1**

(12) **EUROPÄISCHE PATENTSCHRIFT**

(45) Veröffentlichungstag der Patentschrift: **17.07.91**

(51) Int. Cl.⁵: **A47B 96/18**, B32B 3/02

(21) Anmeldenummer: **87118281.2**

(22) Anmeldetag: **10.12.87**

(54) **Verfahren zur Herstellung einer eine Abtropfkante aufweisenden Arbeitsplatte.**

(30) Priorität: **24.01.87 DE 3702148**

(43) Veröffentlichungstag der Anmeldung:
**03.08.88 Patentblatt 88/31**

(45) Bekanntmachung des Hinweises auf die
Patenterteilung:
**17.07.91 Patentblatt 91/29**

(84) Benannte Vertragsstaaten:
**AT BE DE FR GB IT NL**

(56) Entgegenhaltungen:
**DE-A- 3 131 820**
**DE-A- 3 308 947**
**DE-C- 3 602 729**

(73) Patentinhaber: **Westag & Getalit AG**
**Hellweg 21**
**W-4840 Rheda-Wiedenbrück(DE)**

(72) Erfinder: **Frohn, Willi**
**Selhorster Strasse 71**
**W-4831 Langenberg(DE)**
Erfinder: **Tigges, Thomas**
**Ahornweg 4**
**W-4740 Oelde 2(DE)**

(74) Vertreter: **Sroka, Peter-Christian, Dipl.-Ing.**
**Dominikanerstrasse 37 Postfach 111038**
**W-4000 Düsseldorf 11(DE)**

## Beschreibung

Die Erfindung betrifft ein Verfahren zur Herstellung einer eine Abtropfkante aufweisenden, aus einer Grundplatte und einer mit der Grundplatte durch ein Klebemittel verbundenen Deckschicht bestehenden Arbeitsplatte, bei dem im Bereich eines abgerundeten Längsrandes der Grundplatte in deren Unterseite eine parallel zum Längsrand verlaufende Nut eingefräßt wird, die man mit einem Kunststoffmaterial ausgießt, in das zur Bildung der Abtropfkante eine nutenförmige Vertiefung gefräßt wird (vergl. DE-OS 33 08 947).

Bei Arbeitsplatten, bei denen die Vorderkante eine 180°-Rundung aufweist (Halbstab), besteht das Problem, daß Wassertropfen von der Oberfläche an der Rundung herab und an der Unterseite der Arbeitsplatte bis an eine Unterkonstruktion, z.B. Unterschrank, heranlaufen. Um dies zu verhindern, gibt es zahlreiche technische Lösungen für Abtropfkante bzw. Kunststoffprofile, die in die Unterseite der Arbeitsplatte eingelassen werden. Es wird verwiesen beispielsweise auf die deutschen Gebrauchsmusterschriften 85 15 453 und 86 03 035 und 85 21 730 sowie auf die DE-OS 33 08 947.

All diesen bekannten Lösungen haftet der Nachteil an, daß das eingegossene Kunststoffmaterial bzw. die eingelassenen Kunststoffprofile sich nur unzureichend gegenüber der Grundplatte, insbesondere wenn diese eine Spannplatte ist, und gegenüber einer mit der Grundplatte verklebten Deckschicht abdichten lassen. Dieser Nachteil wirkt sich dann besonders aus, wenn die Abtropfkante nicht plan unterhalb der Platte liegt, sondern noch im Bereich der gerundeten Vorderkante angebracht werden muß, weil der Unterschrank besonders nah an die Vorderkante heranreicht.

Eine in der DE-OS 33 08 947 beschriebene Arbeitsplatte, bestehend aus einer Grundplatte und einer damit verklebten Deckschicht, wird in der Weise hergestellt, daß man in die Grundplatte einen Nut einfräßt, diese Nut mit einem geeigneten Kunststoffmaterial ausgießt oder in diese Nut ein geeignetes Profil einsetzt und mit der Grundplatte verklebt und dann die Deckschicht bzw. eine die Arbeitsplattenunterseite bedeckende Abdeckung mit der Grundplatte so verklebt, daß einerseits die Deckschicht und andererseits die untere Abdeckschicht mit der Grundplatte und den bündig mit der Grundplatte abschließenden Rändern des Profileinsatzes verklebt ist. Auch bei einer derartigen Arbeitsplatte besteht die Gefahr von Undichtigkeiten im Bereich der Fugen zwischen dem Profileinsatz und der Deckschicht.

Wenn bei dieser bekannten Arbeitsplatte das Kunststoffmaterial in die Nut der Grundplatte eingegossen wird, wird anschließend in dieses Material die nutförmige Vertiefung eingearbeitet, beispielsweise gefräßt, bevor die Deckschicht und/oder Abdeckschicht mit der Grundplatte verklebt wird.

Der Erfindung liegt die Aufgabe zugrunde, ein Verfahren zur Herstellung einer entlang eines Randes abgerundeten Arbeitsplatte mit einer Abtropfkante zu schaffen, bei dem die Gefahr von Undichtigkeiten im Bereich der Fugen zwischen den einzelnen Materialien weitgehend ausgeschaltet ist.

Zur Lösung dieser Aufgabe ist das erfindungsgemäße Verfahren dadurch gekennzeichnet, daß man die Deckschicht die in die Grundplatte eingefräßte Nut überdeckend mit der Grundplatte verklebt, anschließend das Kunststoffmaterial in die Nut einspritzt und dann durch die Deckschicht hindurch die nutenförmige Vertiefung in das Kunststoffmaterial einfräßt.

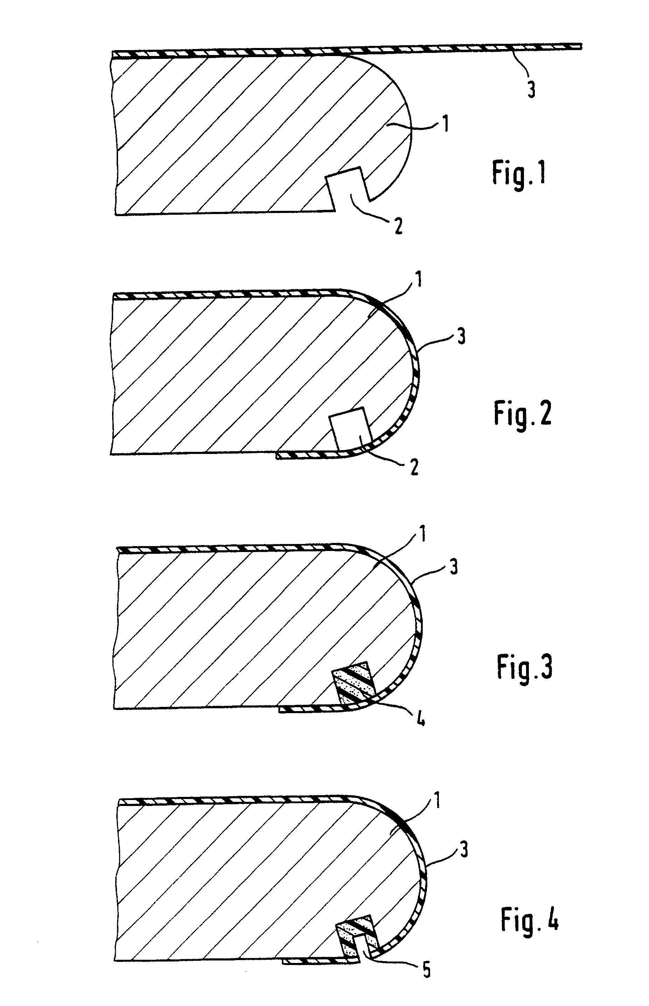

Das erfindungsgemäße Verfahren wird im folgenden anhand der Fig. 1 bis 4 beschrieben, die aufeinanderfolgende Arbeitsschritte systematisch darstellen.

In die Grundplatte 1, beispielsweise eine Spanplatte, mit abgerundetem Vorderrand wird im Bereich des unteren Auslaufs der Rundung eine Nut 2 eingefräßt. Anschließend wird die Schichtstoffplatte 3 auf der Oberseite der Grundplatte 2 aufgeleimt und in einem bekannten Verfahrensschritt um die Vorderseite der Grundplatte herumgebogen, bis die Vorderkante der Deckschicht 3, beispielsweise Schichtstoffplatten, auf der Unterseite der Grundplatte anliegt, und dabei ebenfalls mit der Grundplatte verklebt. Die Nut 2 wird dadurch von der Deckschicht 3 über die Länge der Arbeitsplatte abgedeckt und ist lediglich an den Stirnseiten offen. Bei dem Verkleben der Deckschicht mit der Grundplatte ist darauf zu achten, daß man dem die Nut 2 überdeckenden Streifen der Deckschicht 3 klebemittelfrei läßt. In einem weiteren Verfahrensschritt bringt man in Längsrichtung der Nut 2 etwa im mittleren Bereich derselben in der die Nut 2 überdeckenden Deckschicht 3 eine Öffnung zum Einspritzen des Kunststoffmaterials 4 in die Nut 2 an. Bei dem Kunststoffmaterial 4, handelt es sich zum Beispiel um Polyurethan oder Polyurethan-Schaum. Dieses Material geht dabei eine innige Verbindung sowohl mit der Grundplatte 1 an den drei Seiten der Nut 2 und mit der Deckschicht bzw. Schichtstoffplatte 3 ein.

Anschließend wird im Bereich des Materialstreifens 4 durch die Deckschicht 3 hindurch in das Kunststoffmaterial einen nutenförmige Vertiefung 5 eingefräßt. Dadurch ist gewährleistet, daß die Grundplatte 1 im Bereich der nutenförmigen Vertiefung 5 zuverlässig gegen Feuchtigkeit von außen abgeschirmt ist und infolge der innigen Verbindung zwischen Kunststoffmaterial und Deckschicht auch keine Feuchtigkeit die Deckschicht unterwandern kann.

## Patentansprüche

1. Verfahren zur Herstellung einer eine Abtropfkante aufweisenden, aus einer Grundplatte (1) und einer mit der Grundplatte durch ein Klebemittel verbunddenen Deckschicht (3) bestehenden Arbeitsplatte, bei dem im Bereich eines abgerundeten Längsrandes der Grundplatte in deren Unterseite eine parallel zum Längsrand verlaufende Nut (2) eingefräßt wird, die man mit einem Kunststoffmaterial (4) ausgießt, in das zur Bildung der Abtropfkante eine nutenförmige Vertiefung (5) gefräßt wird, dadurch gekennzeichnet, daß man die Deckschicht (3) die in die Grundplatte (1) eingefräßte Nut (2) überdeckend mit der Grundplatte (1) verklebt, anschließend das Kunststoffmaterial (4) in die Nut einspritzt und dann durch die Deckschicht (3) hindurch die nutenförmige Vertiefung (5) in das Kunststoffmaterial (4) einfräßt.

2. Verfahren nach Anspruch 1, dadurch gekennzeichnet, daß man den die Nut (2) überdeckenden Streifen der Deckschicht (3) klebemittelfrei Läßt.

3. Verfahren nach Anspruch 1 oder 2, dadurch gekennzeichnet, daß man in Längsrichtung der Nut (2) etwa im mittleren Bereich derselben in der die Nut (2) überdeckenden Deckschicht (3) eine Öffnung zum Einspritzen des Kunststoffmaterials (4) in die Nut (2) anbringt.

4. Verfahren nach Anspruch 1, dadurch gekennzeichnet, daß man ein Kunststoffmaterial (4) verwendet, das sich während oder nach dem Einspritzen in die Nut (2) fest mit dem Material der Grundplatte (1) und der Deckschicht (3) verbindet.

## Claims

1. A method of producing a worktop which has a drip-off edge and which consists of a base plate (1) and a top layer (3) connected to the base plate by an adhesive, in the case of which in the region of a rounded-off longitudinal edge of the base plate in the underside thereof there is milled a groove (2) which extends parallel to the longitudinal edge and which is filled with a plastics material (4), into which for the formation of the drop-off edge a groove-shaped depression (5) is milled, characterised in that the top layer (3) is bonded to the base plate to cover the groove (2) milled into the base plate (1), then the plastics material (4) is injected into the groove and then the groove-shaped depression (5) is milled through the top layer (3) into the plastics material (4).

2. A method according to claim 1, characterised in that the strip of the top layer (3) which covers the groove (2) is left free of adhesive.

3. A method according to claim 1 or 2, characterised in that in the longitudinal direction of the groove (2) approximately in the central region of the same there is positioned in the top layer (3) which covers the groove (2) an aperture for the injection of the plastics material (4) into the groove (2).

4. A method according to claim 1, characterised in that a plastics material is used which, during or after the injection into the groove (2), connects itself securely to the material of the base plate (1) and of the top layer (3).

## Revendications

1. Procédé de fabrication d'une plaque de travail, présentant un bord d'égouttage, composée d'une plaque de base (1) et d'une couche de couverture (3) reliée à la plaque de base au moyen d'un adhésif, où, dans la zone d'une bordure longitudinale arrondie de la plaque de base, sur sa face inférieure, est fraisée une rainure (2) parallèle au bord longitudinal, que l'on remplit d'un matériau synthétique (4), dans lequel on fraise une cavité en forme de rainure (5), en vue de former le bord d'égouttage, caractérisé en ce que l'on colle la couche de couverture (3) à la plaque de base (1), en recouvrant la rainure (2) fraisée dans la plaque de base (1), on injecte ensuite le matériau synthétique (4) dans la rainure et l'on procède ensuite au fraisage de la cavité en forme de rainure (5), en traversant la couche de couverture (3) et en pénétrant dans le matériau synthétique (4).

2. Procédé selon la revendication 1, caractérisé en ce qu'on laisse sans adhésif la bande de couche de couverture (3) qui recouvre la rainure (2).

3. Procédé selon la revendication 1 ou 2, caractérisé en ce que l'on ménage dans la rainure (2) une ouverture servant à l'injection du matériau synthétique (4), en direction longitudinale de la rainure (2), à peu près dans la zone centrale de celle-ci, dans laquelle la couche de couverture (3) recouvre la rainure (2).

4. Procédé selon la revendication 1, caractérisé en ce que l'on utilise un matériau synthétique qui se lie fermement, pendant ou après l'injection dans la rainure (2), au matériau de la plaque de base (1) et de la couche de couverture (3).

Fig.1

Fig.2

Fig.3

Fig.4